(19) **Europäisches Patentamt**
**European Patent Office**
**Office européen des brevets**

(11) **EP 2 860 876 B1**

(12) **EUROPEAN PATENT SPECIFICATION**

(45) Date of publication and mention
of the grant of the patent:
**25.04.2018 Bulletin 2018/17**

(51) Int Cl.:
**H04B 1/04** $^{(2006.01)}$

(21) Application number: **13290242.0**

(22) Date of filing: **11.10.2013**

(54) **Local oscillator phase noise compensation**

Lokale Oszillatorphasenrauschkompensation

Compensation du bruit de phase d'un oscillateur local

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.04.2015 Bulletin 2015/16**

(73) Proprietor: **Alcatel Lucent
91620 Nozay (FR)**

(72) Inventors:
• **Wong, James
Swindon, SN5 7YT (GB)**

• **Yu, Xin
70435 Stuttgart (DE)**

(74) Representative: **Sarup, David Alexander et al
Alcatel Lucent Telecom Ltd
Patent Business
c/o Nokia Technologies (UK) Limited
3 Sheldon Square
London W2 6PY (GB)**

(56) References cited:
**EP-A1- 1 443 640      EP-A1- 2 120 347
US-A1- 2008 232 611**

Printed by Jouve, 75001 PARIS (FR)

**Description**

**Field of the Invention**

The present invention relates to phase noise compensation in local oscillators for RF transceivers for use in telecommunication systems, particularly though not exclusively mobile telecommunication systems.

**Background Art**

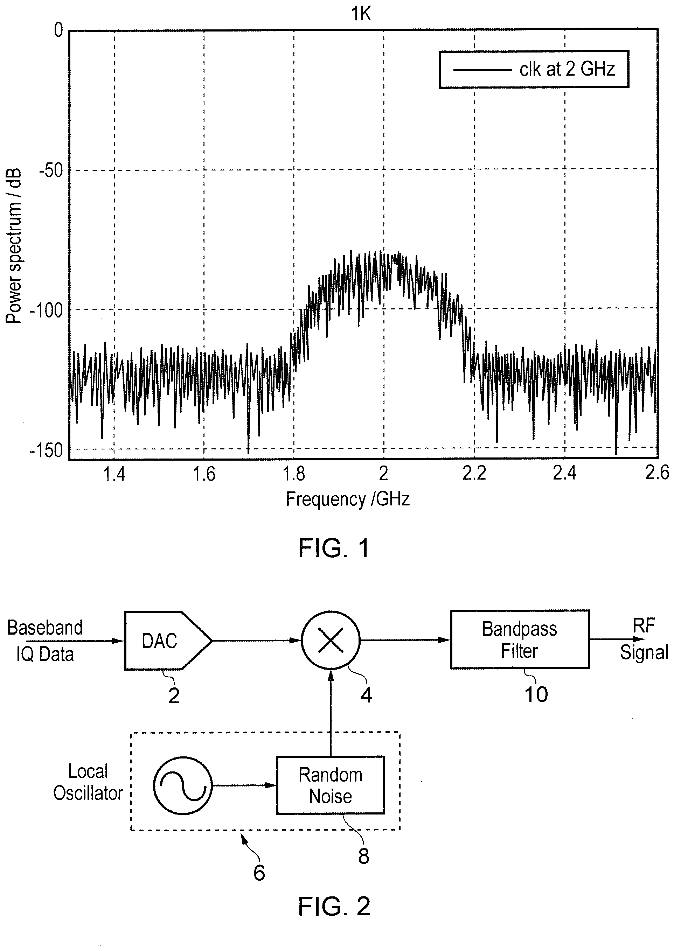

Local oscillators are employed in radio transceivers for generating a base oscillatory signal for the signal up-conversion path and down-conversion path. Oscillators take a wide variety of forms, ranging from Variable Frequency Oscillators based on positive feedback from an LC circuit, fixed frequency oscillators employing a crystal oscillator, frequency synthesizers employing a phase locked loop (PLL), and Direct Digital Synthesis (DDS). Currently available oscillators commonly employ a crystal oscillator, followed by stages of frequency multiplication to the desired output frequency. Local oscillators, which may employ any of the above types of oscillator, are notoriously known for their inherent phase noise which affects quality of signals generated. In general, the higher the frequency of a local oscillator signal, the greater the amount of phase jitter. Figure 1 shows power spectral density as a function of frequency for a local oscillator of frequency 2 GHz, which shows a pronounced hump between 1.8 and 2.2 GHz. Figure 2 shows schematically a block diagram of a typical transmit path of an RF transceiver, wherein Baseband data in IQ format (two paths 90° out of phase) is converted to analog form in a DAC 2 and mixed in a mixer 4 with a local oscillator signal from a local oscillator 6. The random noise generated in the oscillator is represented schematically as a random noise source 8. The output from the mixer is filtered in a bandpass filter 10, and provided as an output RF signal. The arrangement shown is known as a "Zero-IF" transmitter, since the Baseband data is up-converted to transmission frequency in a single step by means of a local oscillator tuned to transmission frequency.

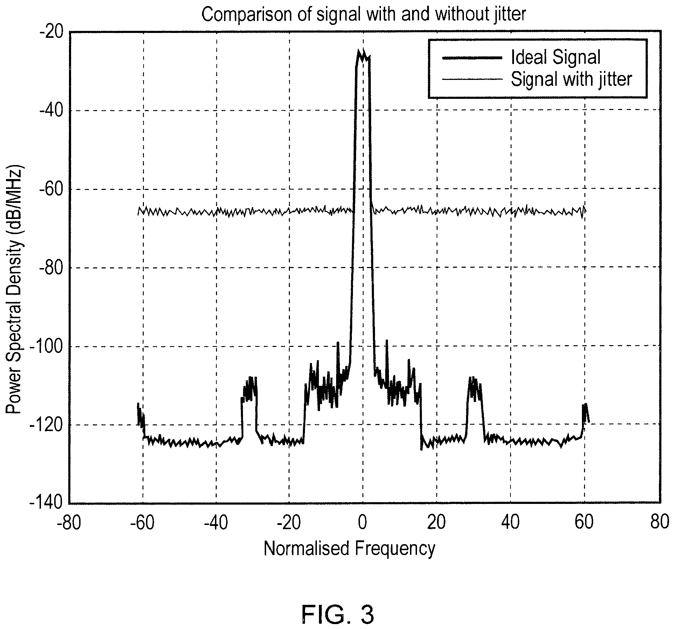

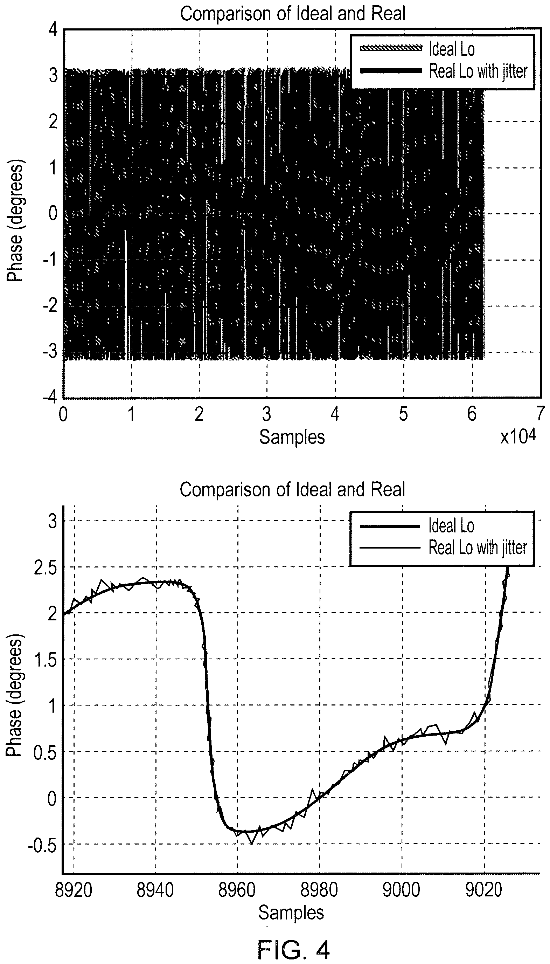

Figures 3 and 4 show the effects of phase noise on a modulated signal, that is the output of mixer 4, the oscillator signal mixed with the data signal. In Figure 3, the lower line indicates an ideal oscillator signal mixed with data, but the upper line shows a practical situation with phase noise, or jitter, about 60dB greater than the data signal. Figure 4 show a time domain representation of the modulated signal together with phase jitter, with the x-axis representing sequential samples of the modulated signal, and the y-axis representing phase of the signal. In the left hand graph, vertical elements represent the ideal modulated signal, whereas the large background area represents the real signal with phase noise. The right hand side is a zoomed version of the left in the region samples nos. 8920 to 9020, and shows a smooth curve representing the modulated signal, with discontinuous variations caused by phase jitter.

Anti-jitter circuits have been well established with various forms documented. US-A-2008/0232611 discloses deriving a correction signal having an estimate of additional phase noise in a local oscillator signal. A signal having the additional phase noise is obtained by downconverting a replica local oscillator signal. The signal is digitized and a phase noise estimate signal at DC is obtained. The complex conjugate of the phase noise estimate provides the correction signal, which is applied to compensate the phase noise of the local oscillator signal.

EP-A-1443660 discloses phase noise precompensation wherein a version of a local oscillator signal is fed back to a digital circuit, where the local oscillator signal is digitised, the phase noise in the local oscillator signal is estimated, and a compensation signal is derived and applied to is applied to a data signal to be transmitted.

EP-A-2120437 discloses a local oscillator phase noise correction circuit, analog in form, operating by means of a feedback arrangement which detects phase noise by comparing a divided version of the local oscillator signal with a reference signal in order to detect phase noise, and a phase noise correction section that gives a phase rotation to the baseband signal in dependence on the detected phase noise.

Whilst the processes disclosed in the above references compensate to an extent the phase noise present in a local oscillator signal, further improvements are desirable.

**Summary of the Invention**

Embodiments of the invention provide a means of eliminating or at least substantially reducing phase noise in a local oscillator signal employed in an RF transceiver for a telecommunications system, and comprise an RF transceiver for a telecommunications system, including a mixer, information signal means for applying to the mixer an information signal for transmission, and a local oscillator coupled to the mixer, wherein a feedback path is coupled to receive the local oscillator signal, which includes digitisation means arranged to produce a digitised version of the local oscillator signal with accompanying phase noise, processing means for isolating the phase noise component of said digitised version, means for applying a compensatory version of said phase noise component to said mixer, together with said information signal, and said feedback path including down-conversion means for down-converting the local oscillator signal prior to producing said digitised version, <u>characterised by</u> said down-conversion means comprising first and second stages, each stage including a mixer for mixing the local oscillator signal with a lower frequency signal, and means for applying said lower frequency signal in antiphase to the respective mixers of the first and second stages.

Embodiments of the invention may be employed in an RF transmitter and/or receiver. In one embodiment, the transceiver may be a "zero IF" configuration, where the baseband information signal is converted to the transmission frequency in a single mixing step without going through Intermediate Frequency conversion stages; in this case the frequency of the local oscillator may be high, about 2 GHz, and therefore generating a large amount of phase noise. At such high frequency of 2 GHz, current ADCs and FPGAs used for processing the digitized signal may not be accurate enough or fast enough to digitize the local oscillator signal together with attendant phase noise.

Said information signal may be a digital signal which is digitally modulated, as is normally used in mobile telecommunication systems, but it may be an analog signal as may be used for example in Radio and TV broadcasts (Analog/Digital), Satellite communications, and Navigation, where improvements in noise would significantly help in the received signal quality.

In embodiments, the frequency of the local oscillator signal is reduced by mixing the signal with a signal of lower frequency, which has a much smaller amount of phase jitter. This is carried out in a plurality of stages, so that for example a local oscillator signal above 2 GHz may be mixed in four sequential stages with a lower frequency signal of 500 MHz, to provide a signal of some 100's of MHz which is then digitised. A compensation may be applied to the local oscillator signal to compensate for phase jitter introduced by the 500 MHz signal; compensation may be effected by applying the 500 MHz in antiphase to sequential stages of the mixing process.

In a further preferred feature, a DC reference signal of known amplitude, is applied to the coupled feedback path to adapt the amplitude of the LO signal to the input range of the digitising ADC.

In view of the finite time required for digitizing and applying a compensatory signal, a delay line means is inserted in the feed path between the local oscillator and the mixer. In order to permit an accurate synchronization between the local oscillator signal and the compensatory signal, the delay line delay time Td should be equivalent to the delay in the feedback path, plus the delay in the processing of the digitized signal, plus the delay for transmitting the compensatory signal to the mixer.

Since the delay times may depend on the frequency of the local oscillator, and since delay times may fluctuate during operation, an embodiment may firstly include a look up table containing optimum delay times for each frequency of interest, and secondly an arrangement for monitoring the quality of the output transmission signal. The output transmission signal may be fed back to the processing means (which processes the digitized signal), and a filter arrangement performs fine tuning on the time delay, in dependence on the noise level of the output signal. This fine tuning may be carried out as and when deemed appropriate.

For the purposes of this specification, "Baseband" is intended to refer to the frequency region where processing takes place of the data or information signal, prior to analog conversion and up-conversion to the transmission frequency. Whilst the bandwidth of a transmitted signal may be as low as e.g. 5MHz for a WCDMA signal, nevertheless blocks of data signal may be processed, and hardware may be running at some hundreds of MHz; all of which would be considered within the Baseband frequency range. However in practice it may not be practical to compensate for phase noise occurring over the entire bandwidth of "Baseband". However it is important to compensate as far as possible for phase noise occurring within the transmission band, i.e. the bandwidth of the transmitted signal (or received signal). Limitations of hardware in the processing system will create limitations on the amount of phase noise that can be compensated, and a "perfect" compensation is not possible in practice.

### Brief Description of the Drawings

An embodiment of the invention will now be described, by way of example only, with reference to the accompanying drawings, wherein:

Figure 1 is a power spectral density as a function of frequency for a local oscillator of frequency 2 GHz;

Figure 2 is a schematic block diagram of a typical RF transmit path employing a local oscillator;

Figure 3 is a representation of an ideal local oscillator signal, modulated with an information signal, and a local oscillator signal in practical form, with phase jitter;

Figure 4 is time domain representations of a local oscillator signal in practical form, showing phase jitter;

Figure 5 is a block diagram shown for the purpose of explaining the invention;

Figure 6 is a block diagram shown for the purpose of explaining the invention;

Figure 7 is a view corresponding to Figure 6, but showing the concept of IQ signal transmission;

Figure 8 comprises views, corresponding to those of Figures 3 and 4, of a signal with jitter, and a jitter-compensated signal, which may be achieved with the invention;

Figure 9 is a block diagram of an embodiment of the invention; and

Figure 10 is a block diagram showing features which may be employed with the invention.

## Description of Embodiments of the Invention

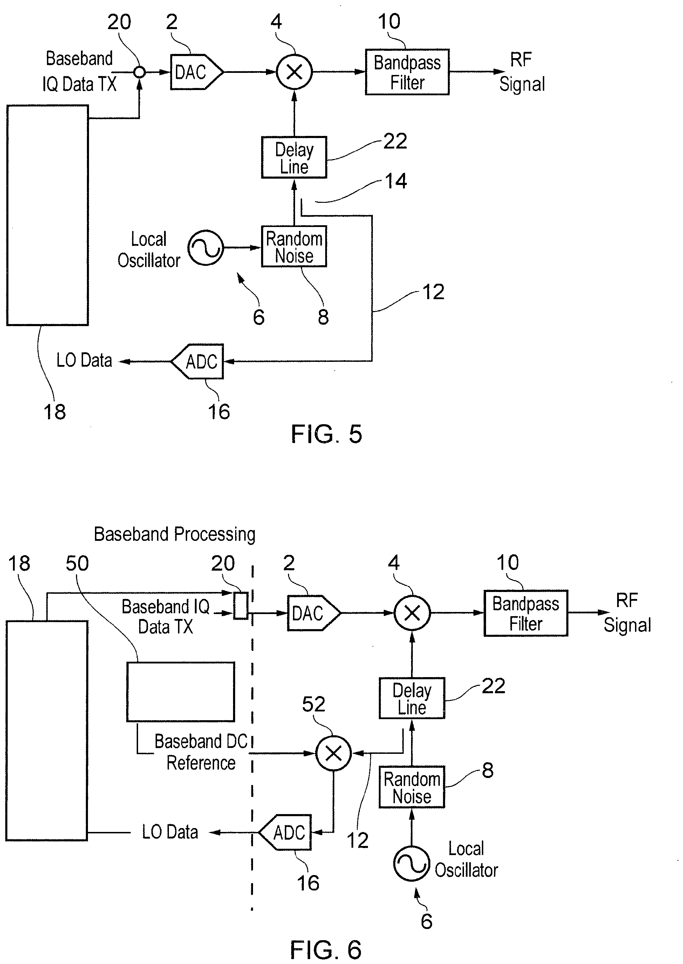

Figure 5 shows a block diagram of an arrangement that eliminates phase noise/jitter, or at least substantially reduces it. In Figure 5, similar parts to those of Figure 2 are denoted by the same reference numeral, that is a DAC 2 feeding a Baseband IQ Data signal (e.g. for LTE, 20 MHz wide) to a mixer 4, where it is mixed with a 2.14 GHz signal from local oscillator 6, 8 and then band pass filtered at 10 for transmission. This type of modulation, where the baseband signal is mixed directly with the RF transmission frequency signal without IF modulation, is known as zero-IF transmission. A feedback path 12 is introduced from between the local oscillator 6 and the mixer 4, by means of a directional coupler 14, and includes an analog to digital converter 16. ADC 16 has sufficiently wide bandwidth (number of bits) in order to track phase variations in the local oscillator signal. This coupled signal is then analysed in baseband. The LO signal in mixer 4 can be mathematically given by:

$$S_{LO} = e^{j(2\pi ft + \delta)} \quad , \qquad (1)$$

Where f and $\delta$ indicate the carrier frequency and random phase noise of normal distribution. The RF signal can be represented by:

$$S_{RF} = real\left(Sig \cdot S_{LO}\right) = real(Sig \cdot e^{j(2\pi ft + \delta)}) = real\left(|Sig| \cdot e^{j(2\pi ft + \delta + \angle Sig)}\right) . \qquad (2)$$

Where *Sig* is the baseband data signal to be transmitted.
The coupled LO signal can be mathematically given by:

$$S_{LO\_CP} = real(e^{j(2\pi ft + \delta)}) = \cos(2\pi ft + \delta)$$

Since we know exactly the properties and behaviour of a clean and ideal local oscillator, the phase noise information can be extracted out and pre-compensated onto the transmit baseband data, as given by:

$$Sig_{comp} = Sig \cdot e^{j(-\delta)} . \qquad (3)$$

Consequently, the RF signal would be perfect in terms of phase noise introduced by LO, as shown:

$$S_{RF\_comp} = real\left(Sig_{comp} \cdot S_{LO}\right) = real\left(|Sig| \cdot e^{j(2\pi ft + \delta + \angle Sig - \delta)}\right) = real\left(|Sig| \cdot e^{j(2\pi ft + \angle Sig)}\right) . \qquad (4)$$

A processor 18 is arranged to carry out the above processing steps, and to provide an inverted and pre-compensated form of the phase noise to be added to the Baseband Data at summing junction 20, prior to conversion to analog form in DAC 2. A delay line 22 is inserted prior to the mixer 4 as a means to synchronise the local oscillator signal with the pre-compensation processing occurring in processor 18, which creates a time delay.

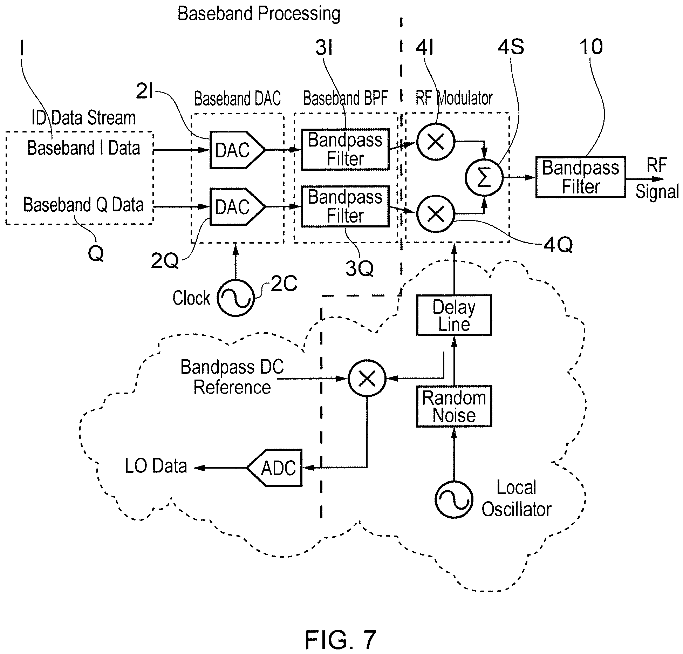

Figures 6 and 7 show an arrangement that may be implemented in practice on a transmit path of an RF transceiver employed in mobile telecommunications, where similar parts to Figure 5 are denoted by the same reference numeral.

The mixing of the baseband IQ data signal in mixer 4 is shown in more detail in Figure 7, where two separate data paths I, Q are provided, for the I data signal, and the Q data signal. These are converted to analog form in DACs 2I, 2Q, the DACs being clocked by a clock 2C, filtered at 3I, 3Q, and are mixed with the local oscillator signal in respective mixers 4I, 4Q, the local oscillator signal applied to mixer 4Q being 90° lagging the local oscillator signal applied to mixer 4I. The I, Q signals are subsequently summed at 4S. Clearly in such arrangement, elimination of phase jitter is very important.

In Figure 6, delay line 22, which can be a simple length of microstrip line, is inserted between the mixer 4 and the local oscillator 6. A DC (0 Hz) reference signal 50 of known amplitude is applied to the coupled noise path by means of a multiplying circuit 52. By using a reference DC voltage, which has the effect of raising the amplitude level of all signals from the local oscillator, we can adapt the amplitude of the LO signal to fit the input voltage range of ADC 16. Consequently the LO signal can be sampled optimally, and at a much lower frequency than the LO frequency, by use of an undersampling technique. For example for 2.14GHz LO, if it is sampled at 333.33MHz, we get the LO signal at 140MHz as well as its phase jitter information close to 140MHz, and above and below 140 MHz. If the bandwidth of the ADC is sufficiently wide enough to sample and detect the finer jitters (14bits is currently the norm), this approach is practical.

Once having obtained the digitised LO signal at 140 MHz, it is compared with a time and phase synchronised pure 140 MHz sinusoid signal in processor 18, in order to extract the phase jitter information from the LO signal. An inverted version of the phase jitter signal is then applied to summing junction 20, as in Figure 5 above.

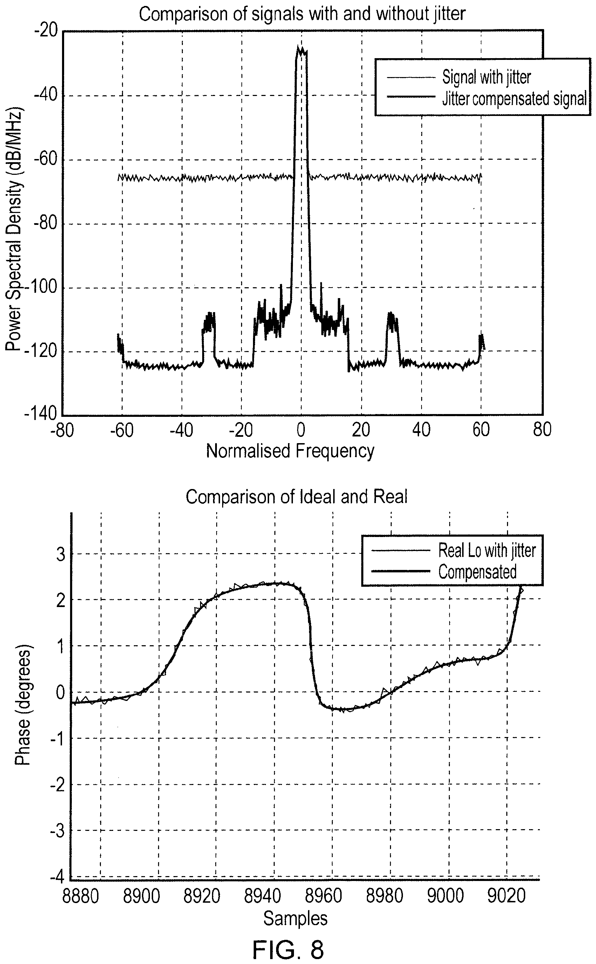

Figure 8, which comprises views similar to Figures 3 and 4, show the jitter compensated signal of Figures 6 and 7, and the improvements which may be expected by means of the present invention.

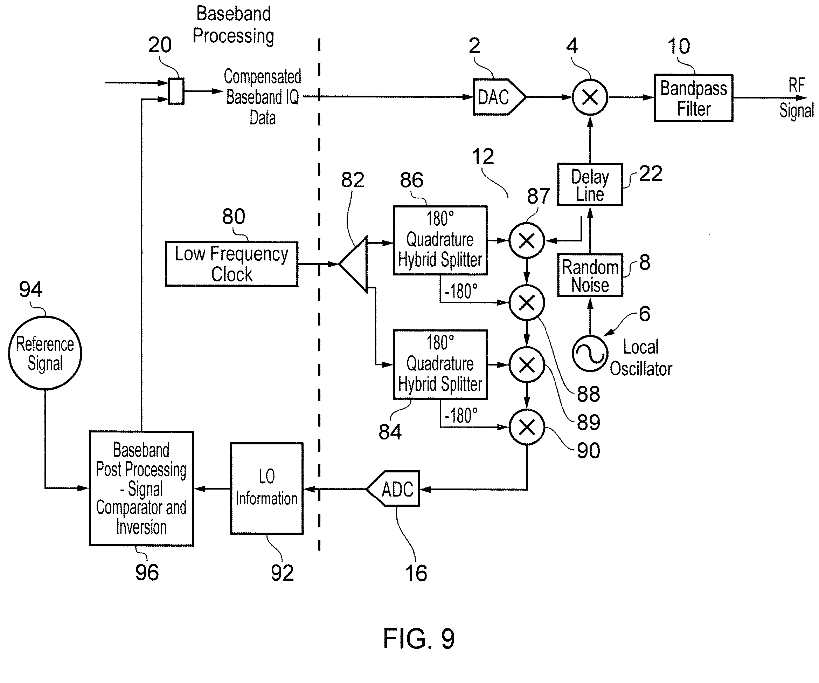

Referring now to figure 9, which shows an embodiment of the invention, similar parts to those of Figure 5 are denoted by the same reference numeral. In a mobile telecoms RF transceiver employing a zero IF technique, the LO frequency is normally very high, e.g. 2.14 GHz, which is not feasible to be digitalized and processed in baseband, for example in FPGA. So in this embodiment the sinusoid LO signal is mixed down to a much lower frequency, for example from 2.14GHz to about 100MHz. Then, we are able to digitalize the sinusoid signal at 100MHz to detect the phase noise in baseband.

A low frequency clock source 80, for example operating at 500 MHz is coupled via a distributor circuit 82 to a first 180° quadrature hybrid splitter 84 and a second 180° quadrature hybrid splitter 86. Signals are taken from the ports of the splitters at 180°, in antiphase relative to each other, and are applied to respective first, second, third and fourth mixers 87, 88, 89, 90. Because the low frequency clock 80 will have phase noise as well, but at a much lower level than that of local oscillator 6, the hybrid splitters 82, 84 generating two signals with 180 degree phase shift will actively cancel the noise of low frequency clock 80 in the feedback path 12. The use of four mixers 87 - 90 will reduce the frequency of the LO by 4x500MHz = 2GHz from 2.14 GHz to 0.14 GHz. Multiplication by a DC reference value may also take place, as with Figure 6.

Therefore the signal digitised in ADC 16 is 140 MHZ, but containing the phase components of the local oscillator signal in this frequency region. The signal output by ADC 16 is represented by block 92, the local oscillator information in digital form. A known reference signal from source 94, a low frequency sine wave, 140 MHz, is applied together with the LO information signal, to a unit 96, which performs Baseband processing involving signal comparison/ correlation and inversion. In baseband, the ideal reference signal we are comparing with is a pure clean sine-wave. The timing alignment and correlation for two sine waves is simple to perform. Any phase noise or jitters would appear as excursions from the ideal sine wave envelope. After timing alignment of the LO signal and the baseband ideal sinusoid signal, we compare the phase of the two signals and calculate the phase difference. The baseband I/Q signal is then appropriately rotated by a compensatory phase difference in summing circuit 20.

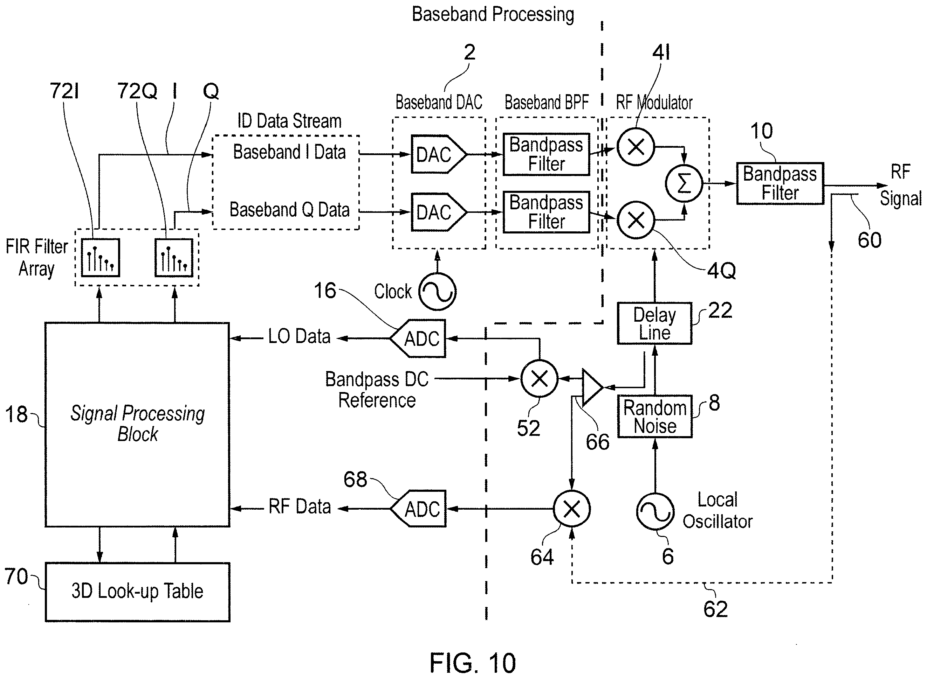

Referring now to the arrangement shown in Figure 10, similar parts as in Figures 6 and 7 are denoted by the same reference numerals. A directional coupler 60 senses the RF output signal, and this is fed back in a path 62, where it is mixed in a mixer 64 with the local oscillator signal from coupler 14 and a splitter 66. The output of mixer 64 is digitised in an ADC 68, and the output "RF Data" is fed to signal processor 18. The output RF Data will contain a low frequency representation of the coupled RF signal, plus LO noise and RF signal noise (originated from the LO noise + any imperfect noise cancellation). A 3-D look up table 70 is coupled to processor 18, and the output of processor 18 is fed on two separate output paths I, Q, which include respective FIR (finite impulse response) filter arrays 72I, 72Q, to mixers 4I, Q.

The 3-D Look-up Table 70 comprises a matrix of delay values that span across a Local Oscillator frequencies axis and an operating temperature axis, having values which will be encountered in use. The population of this matrix only occurs once during factory calibration, and thereafter is accessed by processor 18, depending on the local oscillator frequency in use and operating temperature (sensed by means not shown). This therefore provides a more exact adjustment of time delay values and synchronisation of the compensatory signal with the local oscillator signal in mixers 4I, 4Q.

A dynamic means of ensuring phase noise cancellation is provided by feedback path 62. The purpose of this path is to monitor the noise level during the optimisation and fine-tuning of the transmit delay. This can be done once in an initial tune up operation, or continuously or at intervals throughout transmission. The RF output signal is mixed with the local oscillator signal in mixer 64, and the mixed signal is applied to ADC 68, for monitoring in signal processor 18. In the case where the compensatory signal isn't aligned correctly, the noise level observed in the RF Data signal will be high, but in the case where the LO noise is fully compensated, then only the LO noise is observed. The value of the noise level is employed to adjust the coefficients of FIR Filter array 72I,Q in order to perform fine delay optimisation.

Advantages of the present invention are as follows:

A cleaner signal can be transmitted/received with improved system noise floor performance.

Existing solutions can only minimize phase noise to a certain degree. This invention further improves reduction in phase noise.

The description and drawings merely illustrate the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. An RF transceiver for a telecommunications system, including a mixer (4), information signal means (2, 20) for applying to the mixer an information signal for transmission, and a local oscillator (6) coupled to the mixer, wherein a feedback path (12) is coupled to receive the local oscillator signal, which includes digitisation means (16) arranged to produce a digitised version of the local oscillator signal with accompanying phase noise, processing means (94, 96) for isolating the phase noise component of said digitised version, means (20) for applying a compensatory version of said phase noise component to said mixer, together with said information signal, and said feedback path including down-conversion means (80-90) for down-converting the local oscillator signal prior to producing said digitised version, **characterised by** said down-conversion means comprising first (87) and second (88) stages, each stage including a mixer for mixing the local oscillator signal with a lower frequency signal, and means (80, 86) for applying said lower frequency signal in antiphase to the respective mixers of the first and second stages.

2. A transceiver according to claim 1, said down-conversion means further comprising third (89) and fourth (90) stages, each stage including a mixer for mixing the local oscillator signal with a lower frequency signal, and means (80, 84) for applying said lower frequency signal in antiphase to the respective mixers of the third and fourth stages.

3. A transceiver according to claim 1 or 2, wherein said means for applying a lower frequency signal include a 180° quadrature hybrid splitter (84, 86).

4. A transceiver according to any preceding claim, including reference signal means (50, 52) for mixing in said feedback path a DC signal with said local oscillator signal.

5. A transceiver according to any preceding claim, including a time delay means (22) located between said local oscillator and said mixer, which provides a time delay to align the local oscillator signal with said compensatory version, in said mixer and wherein said processing means includes a look up table (70) comprising time delay values against operating frequency and operating temperature for providing a fine adjustment to said time delay.

6. A transceiver according to any of claims 1 to 4, including a time delay means (22) located between said local oscillator and said mixer, which provides a time delay to align the local oscillator signal with said compensatory version, in said mixer, and including a fine adjustment means for said time delay, comprising means (60) for sensing an RF output/ input signal, a mixer (64) for mixing the sensed signal with the local oscillator signal, and digitisation means (68) for digitising the output of the mixer and applying it to said processing means, and time delay adjustment means (72I, 72Q), adjustable in response to the value of said RF output/ input signal, located in the signal path of said compensatory version.

## Patentansprüche

1. RF-Transceiver für ein Telekommunikationssystem, einschließend einen Mischer (4), ein Informationssignalmittel (2, 20) zum Anwenden auf den Mischer eines Informationssignals für die Übertragung und einen lokalen Oszillator (6), der mit dem Mischer gekoppelt ist, wobei ein Feedbackpfad (12) gekoppelt ist zum Empfangen eines lokalen Oszillatorsignals, welches ein Digitalisierungsmittel (16) einschließt, das angeordnet ist zum Herstellen einer digitalisierten Version des lokalen Oszillatorsignals mit begleitendem Phasenrauschen, ein Verarbeitungsmittel (94, 96) zum Isolieren der Phasenrauschkomponente besagter digitalisierten Version, ein Mittel (20) zum Anwenden einer kompensierenden Version besagter Phasenrauschkomponente auf besagten Mischer zusammen mit besagtem Informationssignal und wobei besagter Feedbackpfad einschließt ein Down-Conversion-Mittel (80-90) zum Down-Converting des lokalen Oszillatorsignals zum Herstellen besagter digitalen Version, **dadurch gekennzeichnet, dass** besagtes Down-Conversion-Mittel umfasst erste (87) und zweite (88) Stufen, wobei jede Stufe einschließt einen Mischer zum Mischen des lokalen Oszillatorsignals mit einem Signal niedrigerer Frequenz, und ein Mittel (80, 86) zum Anwenden besagten Signals niedrigerer Frequenz in Gegenphase zu den entsprechenden Mischern der ersten und zweiten Stufe.

**2.** Transceiver nach Anspruch 1, wobei besagtes Down-Conversion-Mittel weiterhin umfasst dritte (89) und vierte (90) Stufen, wobei jede Stufe einschließt einen Mischer zum Mischen des lokalen Oszillatorsignals mit einem Signal niedrigerer Frequenz, und ein Mittel (80, 84) zum Anwenden besagten Signals niedrigerer Frequenz in Gegenphase zu den entsprechenden Mischern der dritten und vierten Phase.

**3.** Transceiver nach Anspruch 1 oder 2, wobei besagtes Mittel zum Anwenden eines Signals niedrigerer Frequenz einschließt einen 180°-Quadratur-Hybrid-Splitter (84, 86).

**4.** Transceiver nach einem beliebigen der vorhergehenden Ansprüche, einschließend ein Referenzsignalmittel (50, 52) zum Mischen in besagtem Feedbackpfad eines DC-Signals mit besagtem lokalen Oszillatorsignal.

**5.** Transceiver nach einem beliebigen der vorhergehenden Ansprüche, einschließend ein Zeitverzögerungsmittel (22), das sich zwischen besagtem lokalen Oszillator und besagtem Mischer befindet, welches eine Zeitverzögerung bereitstellt zum Ausrichten des lokalen Oszillatorsignals mit besagter kompensierenden Version in besagtem Mischer und wobei besagtes Verarbeitungsmittel einschließt eine Tabelle (70), umfassend Zeitverzögerungswerte gegenüber der Betriebsfrequenz und der Betriebstemperatur zum Bereitstellen einer Feineinstellung besagter Zeitverzögerung.

**6.** Transceiver nach einem beliebigen der Ansprüche 1 bis 4, einschließend ein Zeitverzögerungsmittel (22), das lokalisiert ist zwischen besagtem lokalen Oszillator und besagtem Mischer, welches eine Zeitverzögerung bereitstellt zum Ausrichten des lokalen Oszillatorsignals mit besagter kompensierenden Version in besagtem Mischer und einschließend ein Feineinstellungsmittel für besagte Zeitverzögerung, umfassend ein Mittel (60) zum Fühlen eines RF-Ausgangs-/Eingangssignals, einen Mischer (64) zum Mischen des gefühlten Signals mit dem lokalen Oszillatorsignal und ein Digitalisierungsmittel (68) zum Digitalisieren des Ausgangs des Mischers und zum Anwenden auf besagtes Verarbeitungsmittel, und ein Zeitverzögerungseinstellmittel (72I, 72Q), das einstellbar ist als Antwort auf den Wert besagten RF-Ausgangs-/Eingangssignals, das sich im Signalpfad besagter kompensierenden Version befindet.

## Revendications

**1.** Émetteur-récepteur RF destiné à un système de télécommunications, comprenant un mélangeur (4), des moyens relatifs à un signal d'informations (2, 20) destinés à appliquer au mélangeur un signal d'information à transmettre, et un oscillateur local (6) couplé au mélangeur, dans lequel une boucle de rétroaction (12) est prévue pour recevoir le signal de l'oscillateur local, qui comprend des moyens de numérisation (16) conçus pour produire une version numérisée du signal de l'oscillateur local avec un bruit de phase associé, des moyens de traitement (94, 96) destinés à séparer la composante de bruit de phase de ladite version numérisée, des moyens (20) destinés à appliquer une version de compensation de ladite composante de bruit de phase audit mélangeur, en même temps que ledit signal d'informations, et ladite boucle de rétroaction comprenant des moyens de conversion-abaissement de fréquence (80-90) destinés à abaisser la fréquence du signal de l'oscillateur local avant de produire ladite version numérisée, **caractérisé en ce que** lesdits moyens de conversion-abaissement de fréquence comprennent un premier (87) et un deuxième (88) étages, chaque étage comportant un mélangeur pour mélanger le signal de l'oscillateur local avec un signal de plus basse fréquence, et des moyens (80, 86) pour appliquer ledit signal de plus basse fréquence en opposition de phase aux mélangeurs respectifs des premier et deuxième étages.

**2.** Émetteur-récepteur selon la revendication 1, lesdits moyens de conversion-abaissement de fréquence comprenant en outre un troisième (89) et un quatrième (90) étages, chaque étage comportant un mélangeur pour mélanger le signal de l'oscillateur local avec un signal de plus basse fréquence, et des moyens (80, 84) destinés à appliquer ledit signal de plus basse fréquence en opposition de phase aux mélangeurs respectifs des troisième et quatrième étages.

**3.** Émetteur-récepteur selon la revendication 1 ou 2, dans lequel lesdits moyens destinés à appliquer un signal de plus basse fréquence comprennent un diviseur hybride quadrature-180° (84, 86).

**4.** Émetteur-récepteur selon l'une quelconque des revendications précédentes, comprenant des moyens relatifs à un signal de référence (50, 52) destinés à mélanger dans ladite boucle de rétroaction un signal continu avec ledit signal de l'oscillateur local.

5. Émetteur-récepteur selon l'une quelconque des revendications précédentes, comprenant des moyens de retard (22) situés entre ledit oscillateur local et ledit mélangeur, qui fournissent un retard pour aligner le signal de l'oscillateur local avec ladite version de compensation, dans ledit mélangeur et dans lequel lesdits moyens de traitement comprennent une table de conversion (70) contenant des valeurs de retard en fonction de la fréquence de fonctionnement et de la température de fonctionnement pour assurer un réglage fin dudit retard.

6. Émetteur-récepteur selon l'une quelconque des revendications 1 à 4, comprenant des moyens de retard (22) situés entre ledit oscillateur local et ledit mélangeur, qui fournissent un retard pour aligner le signal de l'oscillateur local avec ladite version de compensation, dans ledit mélangeur, et comprenant des moyens de réglage fin dudit retard, comprenant des moyens (60) destinés à détecter un signal d'entrée/sortie RF, un mélangeur (64) destiné à mélanger le signal détecté avec le signal de l'oscillateur local, et des moyens de numérisation (68) destinés à numériser la sortie du mélangeur et l'appliquer auxdits moyens de traitement, et des moyens de réglage de retard (72I, 72Q), ajustables en réponse à la valeur dudit signal d'entrée/sortie RF, situés sur le trajet du signal de ladite version de compensation.

1K

FIG. 1

FIG. 2

FIG. 3

Comparison of Ideal and Real

Comparison of Ideal and Real

FIG. 4

FIG. 5

FIG. 6

Baseband Processing

FIG. 7

## Comparison of signals with and without jitter

## Comparison of Ideal and Real

FIG. 8

FIG. 9

FIG. 10

EP 2 860 876 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080232611 A
- EP 1443660 A

- EP 2120437 A